# EUROPEAN PATENT APPLICATION

(11) **EP 2 562 767 A1**
(43) Date of publication of application: **27.02.2013**
(21) Application number: 11178995.4
(22) Date of filing: 26.08.2011
(51) Int. Cl.: H01B 3/18, H01B 3/30, H01B 3/44

(54) **Article comprising a silane crosslinkable polymer composition**

(71) Applicant: Borealis AG, 1220 Vienna (AT)
(72) Inventor: Dahlen, Kristian, 44460 Stora Höga (SE); Anker, Martin, 42543 Hisings Kärra (SE); Bergqvist, Mattias, 41674 Göteborg (SE); Fossum, Kjell, 44440 Stenungsund (SE); Hjertberg, Thomas, 45691 Kungshamn (SE); Nylander, Perry, 41261 Göteborg (SE); Voigt, Björn, 422 43 Hisings Backa (SE); Fagrell, Ola, SE-444 45 Stenungsund (SE)
(74) Representative: Campbell, Neil Boyd

(57) **Abstract**

The invention relates to an article, preferably a cable, comprising a conductor surrounded by at least one crosslinkable layer comprising a polymer composition which comprises (a) a polyolefin bearing hydrolysable silane groups and a silanol condensation catalyst compound, as well as to a production process of such article which is preferably a cable.

## Description

The present invention relates to an article, preferably a cable, comprising a polymer composition comprising a polyolefin bearing hydrolysable silane groups and a silanol condensation catalyst, to the preparation process of an article, preferably a cable, comprising said composition, the process including a silane-crosslinking step of the article, preferably at least a cable layer, comprising the polymer composition and to a use of said polymer composition for producing an article, preferably a cable.

In wire and cable (W&C) applications a typical cable comprises a conductor surrounded by one or more layers of polymeric materials. The cables are commonly produced by extruding the layers on a conductor. One or more of said layers are often crosslinked to improve i.a. deformation resistance at elevated temperatures, as well as mechanical strength and/or chemical resistance, of the layer(s) of the cable.

Crosslinking of the polymers can be effected e.g. by free radical reaction using irradiation or using a crosslinking agent which is a free radical generating agent; or via hydrolysable silane groups present in the polymer using a condensation catalyst in the presence of water.

Power cable is defined to be a cable transferring energy operating at any voltage level. The voltage applied to the power cable can be alternating (AC), direct (DC) or transient (impulse). Moreover, power cables are typically indicated according to their level of operating voltage, e.g. a low voltage (LV), a medium voltage (MV), a high voltage (HV) or an extra high voltage (EHV) power cable, which terms are well known. Power cable is defined to be a cable transferring energy operating at any voltage level, typically operating at voltage higher than 100 V. LV power cable typically operates at voltages of below 3 kV. MV and HV power cables operate at higher voltage levels and in different applications than LV cables. A typical MV power cable, usually operates at voltages from 3 to 36 kV, and a typical HV power cable at voltages higher than 36 kV. EHV power cable operates at voltages which are even higher than typically used for HV power cable applications. LV power cable and in some embodiment medium voltage (MV) power cables usually comprise an electric conductor which is coated with an insulation layer. Typically MV and HV power cables comprise a conductor surrounded at least by an inner semiconductive layer, an insulation layer and an outer semiconductive layer, in that order.

Silane cured materials are used today primarily as insulation layer in low voltage cables and as insulation and semiconductive layer in medium and to some extent also for high voltage cables.

In case the polymer composition is crosslinkable via hydrolysable silane groups, then the hydrolysable silane groups may be introduced into the polymer by copolymerisation of a monomer, e.g. an olefin, together with a silane group containing comonomer or by grafting silane groups containing compound to a polymer. Grafting is a chemical modification of the polymer by addition of silane groups containing compound usually in a radical reaction. Such silane groups containing comonomers and compounds are well known in the field and e.g. commercially available. The hydrolysable silane groups are typically then crosslinked by hydrolysis and subsequent condensation in the presence of a silanol condensation catalyst and H₂O in a manner known in the art. Silane crosslinking techniques are known and described e.g. in US 4,413,066, US 4.297,310, US 4,351,876, US 4,397,981, US 4,446,283 and US 4,456,704.

For crosslinking of polyolefins containing hydrolysable silane groups, a silanol condensation catalyst must be used. Conventional catalysts are, for example, tin-, zinc-, iron-, lead- or cobalt-organic compounds such as dibutyl tin dilaurate (DBTDL). However, it is known that DBTDL has a negative impact on the natural environment when the crosslinked products, such as cables, are installed in the ground. Furthermore, is also a hazardous material to work with.

It is hence an object of the present invention to provide a further silanol condensation catalyst for a polymer composition comprising a polyolefin bearing hydrolysable silane groups, which avoids the drawbacks of tin based condensation catalysts, i.e. which is more environmentally friendly and less hazardous to work with.

### Description of the invention

It has now surprisingly been found that basic compounds can be used for hydrolysation and subsequent condensation of a silane containing polymer, i.e. as a crosslinking catalyst, in demanding applications, preferably in demanding wire and cable (W&C) applications. Unexpectedly, the condensation catalysts of the invention meet the requirements set for the crosslinking efficiency without adversing the electrical properties, like conductivity requirements, requested e.g. in demanding cable applications. The silanol condensation catalysts of the invention are industrially highly advantageous for silane crosslinking of a polymer composition in an article, preferably in layer(s) of a cable in order to obtain silane-crosslinked cable.

Accordingly, the present invention provides an article comprising a polymer composition which comprises
(a) a polyolefin bearing hydrolysable silane groups and
(b) a silanol condensation catalyst compound, which is a hydroxide of group 1 or group 2 element of the Periodic Table of the Elements (according to IUPAC nomenclature of inorganic chemistry 1989).

The preferred article is a cable comprising a conductor surrounded by at least one layer comprising, preferably consisting of, a polymer composition which comprises
(a) a polyolefin bearing hydrolysable silane groups and
(b) a silanol condensation catalyst compound, which is a hydroxide of group 1 or group 2 element of the Periodic Table of the Elements (according to IUPAC nomenclature of inorganic chemistry 1989).

The term "cable" means cables and wires.

The polymer composition of the invention as defined above or below is referred herein also shortly as "polymer composition". As to the components of the polymer composition, the polyolefin bearing hydrolysable silane groups (a) is referred herein also shortly as "polyolefin (a)" and the silanol condensation catalyst compound (b) is referred herein also shortly as "catalyst (b)".

Moreover, the catalyst (b) can be present in the polymer composition before or after the formation of the article, preferably of the cable layer(s).

The more preferable cable comprises a conductor surrounded by at least one layer which is selected from an insulation layer, a semiconductive layer or a jacketing layer. More preferably, said at least one layer is an insulation layer.

Even more preferably, the cable is a power cable comprising a conductor surrounded at least by an inner semiconductive layer, an insulating layer and an outer semiconductive layer, wherein at least one layer, preferably at least the insulation layer or at least one of the inner and outer semiconductive layer, preferably at least the insulation layer, comprises, preferably consists of, the polymer composition which comprises (a) a polyolefin bearing hydrolysable silane groups and (b) a silanol condensation catalyst compound, which is a hydroxide of group 1 or group 2 element of the Periodic Table of the Elements (according to IUPAC nomenclature of inorganic chemistry 1989).

Naturally, the polymer composition may comprise two or more catalysts (b).

Preferably the article, preferably the cable, is crosslinkable and is subsequently crosslinked before the end use. "Crosslinkable" means that the polymer composition can be silane-crosslinked using the catalyst (b) before the cable is used in the end application thereof.

The following preferable embodiments, properties and subgroups of the polyolefin (a) and the catalyst (b), of the polymer composition, the article and the preferred cable are independently generalisable so that they can be used in any order or combination to further define the preferable embodiments of the polymer composition the article and the preferred cable of the invention. Moreover, unless otherwise stated, it is evident that the given polyolefin (a) description applies to the polyolefin prior optional crosslinking.

### Silanol condensation catalyst compound (Catalyst (b))

Catalyst (b) is an organic compound as defined above, below or in claims which catalyses the crosslinking of silane groups via hydrolysis and subsequent condensation reaction in the presence of said catalyst (b).

Suitable hydroxides of group 1 or group 2 element of the Periodic Table of the Elements (according to IUPAC nomenclature of inorganic chemistry 1989) as the silanol catalyst compound (b) including the preferable subgroups thereof are as such well known and can be e.g. commercially available or can be prepared according to or analogously to known preparation methods described in the chemical literature.

It is evident for a skilled person that the hydroxides of the invention may contain and typically contain crystal water. It is also well known that the amount of the crystal water can vary and can be chosen by a skilled person depending on the desired cable application. As well known, there can be several hydroxide products with varying crystal water content e.g. commercially available for one specific hydroxide compound. Therefore hydroxides suitable for the present invention are defined in the description and in claims without specifying the presence or an amount of the crystal water in the hydroxide, but it is understood that the said general definition are meant to cover hydroxides, which contain crystal water and wherein the crystal water content can vary depending on the nature and preparation method of the hydroxide, and any hydroxides, which do not contain crystal water. The presence of the crystal water is specified for the exemplified specific hydroxides.

More preferably, the silanol condensation catalyst (b) is a hydroxide of group 1 element of the Periodic Table of the Elements (according to IUPAC nomenclature of inorganic chemistry 1989).

Even more preferably, the silanol condensation catalyst compound (b) is selected from LiOH, NaOH, KOH or CsOH, or from any combinations thereof.

The most preferred silanol condensation catalyst compound (b) is selected from one or more of LiOH, KOH or CsOH.

### Polyolefin bearing hydrolysable silane groups (a) (=polyolefin (a))

Where herein it is referred to a "polymer", e.g. polyolefin, such as polyethylene, this is intended to mean both a homo- or copolymer, e.g. a homopolymer and copolymer of an olefin, such as a homopolymer and copolymer ethylene.

The hydrolysable silane groups may be introduced into the polyolefin of polyolefin (a) by copolymerisation of olefin, e.g. ethylene, monomer with at least silane group(s) containing comonomer(s) or by grafting a silane group(s) containing compound(s) to the polyolefin. Grafting is preferably effected by radical reaction, e.g. in the presence of a radical forming agent (such as peroxide). Both techniques are well known in the art.

Preferably, the polyolefin bearing hydrolysable silane groups (a) is a copolymer of olefin with a silane group(s) bearing comonomer and, optionally, with other comonomer(s); or is a homopolymer or copolymer of olefin with silane groups which are introduced by grafting a silane group(s) containing compound to the polyolefin polymer.

As well known "comonomer" refers to copolymerisable comonomer units.

The silane group(s) containing comonomer for copolymerising silane groups or the silane group(s) containing compound for grafting silane groups to produce polyolefin (a) is preferably an unsaturated silane compound/comonomer represented by the formula

R¹SiR²_{q}Y_{3-q} (Ic)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

The hydrocarbyl moiety present in any substituent as R¹ of compound/comonomer (Ic) can be linear or branched hydrocarbyl or a cyclic hydrocarbyl.

More preferable subgroup of compounds/comonomers (Ic), are compounds/comonomers (Icc), wherein R¹ is vinyl, allyl, isopropenyl, butenyl, cyclohexanyl or gamma-(meth)acryloxy alkyl; and Y is methoxy, ethoxy, formyloxy, acetoxy, propionyloxy or an alkyl-or arylamino group; and R², if present, is a methyl, ethyl, propyl, decyl or phenyl group, preferably R² is not present.

Even more preferable subgroups of silane compounds/comonomers (Ic) are compounds/comonomers selected from compounds/comonomers of formula (IIc) or compounds/comonomers of formula (IId):

CH₂=CH-(CH₂)ₜSi(OA)₃ (IIc),

wherein t = 0 to 6, preferably 0 to 5, preferably 0 to 4, more preferably 0 to 3, preferably 0 to 2, more preferably 0 or 1, most preferably 0; and
A is a hydrocarbyl group, formyl group or acetyl group, preferably a hydrocarbyl group having 1-8 carbon atoms, preferably 1-4 carbon atoms; or

CH₂=C(X)-C(=O)-O-(CH₂)s₋Si(OA)₃ (IId),

wherein s = 1 to 6, preferably 1 to 5, more preferably 1 to 4, more preferably 1, 2 or 3, most preferably 3;
X is H or -CH₃, preferably -CH₃; and
A is a hydrocarbyl group, formyl group or acetyl group, preferably a hydrocarbyl group having 1 to 8 carbon atoms, preferably 1 to 4 carbon atoms.

As evident for a skilled person, the choice of the suitable unsaturated silane compound/comonomer depends i.a. on the desired crosslinking effect, e.g. desired crosslinking speed, which can be adjusted e.g. with the desired accessibility of the silane groups to the crosslinking catalyst. The accessibility in turn can be adjusted, as well known, e.g. by the length of the silane side chain protruding from the polymer backbone.

Most preferred compounds are compounds (IIc), preferably vinyl trimethoxysilane, vinyl bismethoxyethoxysilane or vinyl triethoxysilane.

The silane compounds/comonomers for the present invention are well known and available as a commercial product or can be produced according to or analogously to processes documented in the chemical literature.

A suitable polyolefin for the polyolefin (a) bearing hydrolysable silane group(s) containing units can be any polyolefin, such as any conventional polyolefin, which can be used for producing an article which is preferably a cable layer of a cable of the present invention. For instance such suitable conventional polyolefins are as such well known and can be e.g. commercially available or can be prepared according to or analogously to known polymerization processes described in the chemical literature.

The polyolefin (a) for the polymer composition is preferably selected from a polypropylene (PP) or polyethylene (PE), preferably from a polyethylene, bearing hydrolysable silane group(s) containing units.

In case a polyolefin (a) is a copolymer of ethylene with at least one comonomer other than silane group(s) containing comonomer (referred herein also shortly as "other comonomer") and wherein the silane group(s) containing units are incorporated by grafting or copolymerizing with a silane group(s) containing compound/comonomer, then suitable such other comonomer is selected from non-polar comonomer(s) or polar comonomer(s), or any mixtures thereof. Preferable other non-polar comonomers and polar comonomers are described below in relation to polyethylene produced in a high pressure process.

Preferable polyolefin (a) is a polyethylene produced in the presence of an olefin polymerisation catalyst or a polyethylene produced in a high pressure process and which bears hydrolysable silane group(s) containing units.

"Olefin polymerisation catalyst" means herein preferably a coordination catalyst. Such coordination catalyst has a well known meaning and is preferably selected from a Ziegler-Natta catalyst, single site catalyst which term comprises a metallocene and a non-metallocene catalyst, or a chromium catalyst, or a Vanadium catalyst or any mixture thereof. The terms have a well known meaning.

Polyethylene polymerised in the presence of an olefin polymerisation catalyst in a low pressure process is also often called as "low pressure polyethylene" to distinguish it clearly from polyethylene produced in a high pressure process. Both expressions are well known in the polyolefin field. Low pressure polyethylene can be produced in polymerisation process operating i.a. in bulk, slurry, solution, or gas phase conditions or in any combinations thereof. The olefin polymerisation catalyst is typically a coordination catalyst.

More preferably, the polyolefin (a) is selected from a homopolymer or a copolymer of ethylene produced in the presence of a coordination catalyst or produced in a high pressure polymerisation process, which bears hydrolysable silane group(s) containing units.

In a first embodiment of the polyolefin (a) of the polymer composition of the invention, the polyolefin (a) is a low pressure polyethylene (PE) bearing the hydrolysable silane group(s) containing units. Such low pressure PE is preferably selected from a very low density ethylene copolymer (VLDPE), a linear low density ethylene copolymer (LLDPE), a medium density ethylene copolymer (MDPE) or a high density ethylene homopolymer or copolymer (HDPE), which bears hydrolysable silane group(s) containing units. These well known types are named according to their density area. The term VLDPE includes herein polyethylenes which are also known as plastomers and elastomers and covers the density range of from 850 to 909 kg/m³. The LLDPE has a density of from more than 909 to 930 kg/m³, preferably of from more than 909 to 929 kg/m³, more preferably of from 915 to 929 kg/m³. The MDPE has a density of from more than 929 to 945 kg/m³, preferably 930 to 945 kg/m³. The HDPE has a density of more than 945 kg/m³, preferably of more than 946 kg/m³, preferably form 946 to 977 kg/m³, more preferably form 946 to 965 kg/m³. More preferably such low pressure copolymer of ethylene for the polyolefin (a) is copolymerized with at least one comonomer selected from C3-20 alpha olefin, more preferably from C4-12 alpha-olefin, more preferably from C4-8 alpha-olefin, e.g. with 1-butene, 1-hexene or 1-octene, or a mixture thereof. The amount of comonomer(s) present in a PE copolymer is from 0.1 to 15 mol%, typically 0.25 to 10 mol-%.

Moreover, in case the polyolefin (a) is a low pressure PE polymer bearing the hydrolysable silane group(s) containing units, then such PE can be unimodal or multimodal with respect to molecular weight distribution (MWD= Mw/Mn). Generally, a polymer comprising at least two polymer fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions.

"Polymer conditions" mean herein any of process parameters, feeds and catalyst system.

Unimodal low pressure PE can be produced by a single stage polymerisation in a single reactor in a well known and documented manner. The multimodal PE can be produced in one polymerisation reactor by altering the polymerisation conditions and optionally the catalyst, or, and preferably, in the multistage polymerisation process which is conducted in at least two cascaded polymerisation zones. Polymerisation zones may be connected in parallel, or preferably the polymerisation zones operate in cascaded mode. In the preferred multistage process a first polymerisation step is carried out in at least one slurry, e.g. loop, reactor and the second polymerisation step in one or more gas phase reactors. One preferable multistage process is described in EP517868. Preferably, the same catalyst is used in each polymerisation stage of a multistage process.

A LLDPE, MDPE or HDPE as defined above or below are preferable type of low pressure PE for polyolefin (a), more preferably a LLDPE copolymer as defined above or below. Such LLDPE can unimodal or multimodal.

The silane group(s) containing units can be incorporated to the low pressure polyethylene by grafting or by copolymerizing ethylene with a silane group(s) containing comonomer and optionally with other comonomer(s), which is preferably a non-polar comonomer. Preferable hydrolysable silane groups bearing low pressure PE as the polyolefin (a) is a HDPE homopolymer or copolymer, MDPE copolymer or a LLDPE copolymer, wherein the silane group(s) are incorporated by grafting a silane group(s) containing compound. The low pressure PE as the polyolefin bearing hydrolysable silane groups (a) has preferably an MFR₂ of up to 1200 g/10 min, such as of up to 1000 g/10 min, preferably of up to 500 g/10 min, preferably of up to 400 g/10 min, preferably of up to 300 g/10 min, preferably of up to 200 g/10 min, preferably of up to 150 g/10 min, preferably from 0.01 to 100, preferably from 0.01 to 50 g/10 min, preferably from 0.01 to 40.0 g/10 min, preferably of from 0.05 to 30.0 g/10 min, preferably of from 0.1 to 20.0 g/10 min, more preferably of from 0.2 to 15.0 g/10 min.

In a second embodiment of the polyolefin (a) of the invention, the polyolefin (a) is a polyethylene which is produced in a high pressure polymerisation (HP) process and bears hydrolysable silane group(s) containing units. In this embodiment the polyethylene is preferably produced in a high pressure polymerisation process in the presence of an initiator(s), more preferably is a low density polyethylene (LDPE) bearing hydrolysable silane group(s) containing units. It is to be noted that a polyethylene produced in a high pressure (HP) process is referred herein generally as LDPE and which term has a well known meaning in the polymer field. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as different branching architecture, compared to the PE produced in the presence of an olefin polymerisation catalyst.

The polyolefin (a) according to the second embodiment is the preferred polyolefin (a) of the invention and is a polyethylene which is produced by a high pressure polymerisation (HP) and which bears hydrolysable silane group(s) containing units.

In this preferable second embodiment, such hydrolysable silane groups bearing LDPE polymer as polyolefin (a) may be a low density homopolymer of ethylene (referred herein as LDPE homopolymer) or a low density copolymer of ethylene (referred herein as LDPE copolymer) with at least one comonomer selected from the silane group(s) containing comonomer, which is preferably as defined above, or from the other comonomer as mentioned above, or any mixtures thereof. The one or more other comonomer(s) of LDPE copolymer are preferably selected from polar comonomer(s), non-polar comonomer(s) or from a mixture of polar comonomer(s) and non-polar comonomer(s), as defined above or below. Moreover, said LDPE homopolymer or LDPE copolymer as said polyolefin (a) may optionally be unsaturated.

As a polar comonomer, if present in the hydrolysable silane group(s) bearing LDPE copolymer as the polyolefin (a), such polar comonomer is preferably selected from a comonomer containing hydroxyl group(s), alkoxy group(s), carbonyl group(s), carboxyl group(s), ether group(s) or ester group(s), or a mixture thereof. Moreover, comonomer(s) containing carboxyl and/or ester group(s) are more preferable as said polar comonomer. Still more preferably, the polar comonomer(s), if present in the hydrolysable silane groups bearing LDPE copolymer as the polyolefin (a), is selected from the groups of acrylate(s), methacrylate(s) or acetate(s), or any mixtures thereof, more preferably the polar comonomer(s) is selected from the group of alkyl acrylates, alkyl methacrylates or vinyl acetate, or a mixture thereof, even more preferably from C₁- to C₆-alkyl acrylates, C₁- to C₆-alkyl methacrylates or vinyl acetate. Still more preferably, if polar comonomer(s) are present, then the hydrolysable silane groups bearing LDPE copolymer as the polyolefin (a) is a copolymer of ethylene with C₁- to C₄-alkyl acrylate, such as methyl, ethyl, propyl or butyl acrylate, or vinyl acetate, or any mixture thereof, which bears hydrolysable silane group(s) containing units.

As the non-polar comonomer, if present in the hydrolysable silane group(s) bearing LDPE copolymer as the polyolefin (a), such non-polar comonomer is other than the above defined polar comonomer. Preferably, the non-polar comonomer is other than a comonomer containing hydroxyl group(s), alkoxy group(s), carbonyl group(s), carboxyl group(s), ether group(s) or ester group(s). One group of preferable non-polar comonomers, if present in the hydrolysable silane group(s) bearing LDPE copolymer as the polyolefin (a), comprises, preferably consists of, monounsaturated (= one double bond) comonomer(s), preferably olefins, preferably alpha-olefins, more preferably C₃ to C₁₀ alpha-olefins, such as propylene, 1-butene, 1-hexene, 4-methyl-1-pentene, styrene, 1-octene, 1-nonene; polyunsaturated (= more than one double bond, such as diene) comonomer(s); or any mixtures thereof.

If the hydrolysable silane group(s) bearing LDPE polymer as the polyolefin (a) is a copolymer of ethylene with other comonomer(s), then the amount of the other comonomer(s) present in said LDPE polymer is preferably from 0.001 to 50 wt%, more preferably from 0.05 to 40 wt%, still more preferably less than 35 wt%, still more preferably less than 30 wt%, more preferably less than 25 wt%. If present, then the polar comonomer content of the polyolefin (a) is preferably at least 0.05 mol%, preferably 0.1 mol% or more, more preferably 0.2 mol% or more, and at least in insulation layer applications the polar comonomer content of the polyolefin (a) is preferably not more than 10 mol%, preferably not more than 6 mol%, preferably not more than 5 mol%, more preferably not more than 2,5 mol%, based on the polyolefin (a).

As already mentioned, the silane group(s) can be incorporated to the high pressure polyethylene, preferably to the LDPE polymer, as the preferred polyolefin (a) by grafting or by copolymerizing ethylene with a silane group(s) containing comonomer and optionally with other comonomer(s), more preferably by copolymerizing ethylene with a silane group(s) containing comonomer. In this preferred second embodiment the polyolefin (a) is most preferably a LDPE copolymer of ethylene with a silane group containing comonomer as defined above or below and optionally with other comonomer(s).

Typically, and preferably in wire and cable (W&C) applications, the density of the LDPE polymer bearing hydrolysable silane groups as the polyolefin (a), is higher than 860 kg/m³. Preferably the density of such LDPE polymer, is not higher than 960 kg/m³, and preferably is from 900 to 945 kg/m³. The MFR₂ (2.16 kg, 190 °C) of the LDPE polymer bearing hydrolysable silane groups as the polyolefin (a), is preferably from 0.01 to 50 g/10min, more preferably from 0.01 to 40.0 g/10, more preferably is from 0.1 to 20 g/10min, and most preferably is from 0.2 to 10 g/10min.

Accordingly, the LDPE polymer for the polyolefin (a) is preferably produced at high pressure by free radical initiated polymerisation (referred to as high pressure (HP) radical polymerization). The HP reactor can be e.g. a well known tubular or autoclave reactor or a mixture thereof, preferably a tubular reactor. The high pressure (HP) polymerisation and the adjustment of process conditions for further tailoring the other properties of the polyolefin depending on the desired end application are well known and described in the literature, and can readily be used by a skilled person. Suitable polymerisation temperatures range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps.

The incorporation of hydrolysable silane group(s) containing comonomer (as well as optional other comonomer(s)) and the control of the comonomer feed to obtain the desired final content of said hydrolysable silane group(s) containing units can be carried out in a well known manner and is within the skills of a skilled person. Similarly, the MFR of the polymerized polymer can be controlled e.g. by a chain transfer agent, as well known in the field.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mahling pp. 7181-7184.

The polyolefin bearing hydrolysable silane groups (a) is most preferably selected from a homopolymer or copolymer of ethylene produced in a low pressure polymerisation process in the presence of a coordination catalyst, as defined above, and grafted with a silane group bearing compound, as defined above, or from a copolymer of ethylene produced in a high pressure polymerisation process, as defined above or below, by copolymerising ethylene with at least one silane group(s) bearing comonomer, as defined above or below, and, optionally, with one or more other comonomer(s). More preferably, the polyolefin bearing hydrolysable silane groups (a) has been obtained by copolymerisation of ethylene in a high pressure process with at least silane group bearing comonomer as defined above, and, optionally, with one or more other comonomer(s).

### The polymer composition (= polymer composition of the invention)

The polymer composition preferably comprises the silanol condensation catalyst (b) in an amount of 0.0001 or more, preferably up to 6.0 wt%, preferably from 0.001 to 2.0 wt%, more preferably 0.01 to 0.5 wt%, based on the combined amount of the polyolefin bearing hydrolysable silane groups (a) and the silanol condensation catalyst (b).

The polymer composition preferably comprises the polyolefin (a) in an amount of 99.9999 wt% or less, preferably at least 94.0 wt% or more, preferably of 99.999 to 98.0wt%, more preferably of 99.99 to 99.5 wt%, based on the combined weight of the polyolefin (a) and the silanol condensation catalyst (b).

Preferably, the polymer composition comprises hydrolysable silane group(s) in an amount of from 0.001 to 12 mol%, preferably of from 0.01 to 4 mol%, most preferably of from 0.05 to 1.6 mol%, based on the total amount (weight) of the polymer composition. More preferably the mol% amount (calculated from the wt% as determined below under "Determination methods") of the hydrolysable silane group(s) is based on the total amount of the polyolefin (a) component.

"Silane group" means herein the hydrolysable silane moiety. Preferable silane-moiety is (Y)_{3-q}Si- moiety as defined above in formula (Ic) which is crosslinkable by hydrolysation and subsequent condensation reaction in the presence of a silanol condensation catalyst and water, as known in the art, to form Si-O-Si links between other hydrolysable silane-groups present in said polyolefin (a) component. Preferred hydrolysable silane-group is a hydrolysable (AO)₃Si-moiety as defined above in formula (IIc) or (IId).

The polymer composition may contain further components, such as further polymer component(s), like miscible thermoplastic(s), additive(s), such as antioxidant(s), further stabilizer(s), e.g. water treeing retardant(s), scorch retardant(s); lubricant(s), foaming agent(s), filler(s), such as carbon black; or colorant(s).

The total amount of further polymer component(s), if present, is typically up to 60 wt%, preferably up 50 wt%, preferably up 40 wt %, more preferably from 0.5 to 30 wt% , preferably from 0.5 to 25 wt%, more preferably from 1.0 to 20 wt%, based on the total amount of the polymer composition.

The total amount of additive(s), if present, is generally from 0.01 to 10 wt%, preferably from 0.05 to 7 wt%, more preferably from 0.2 to 5 wt%, based on the total amount of the polymer composition.

The polymer composition may, and preferably, comprises antioxidant(s), preferably antioxidant(s) which is preferably neutral or basic. Preferably, the antioxidant is present in the composition in an amount of from 0.01 to 3 wt%, more preferably 0.05 to 2 wt%, and most preferably 0.08 to 1.5 wt%, based on the total amount of the polymer composition.

In one preferable embodiment of the cable of the invention, the polymer composition present in at least one layer as defined above, below or in claims further comprises a scorch retarding compound, which is preferably a silicon containing compound and has a structure according to the formula (III)

(R^{I})ₓ[Si(R²)_{y}(R³)_{z}]m (III)

wherein
R¹, which may be the same or different if more than one such group is present, is a monofunctional hydrocarbyl residue, or, if m = 2, is a bifunctional, hydrocarbyl residue, comprising from 1 to 100 carbon atoms;
R², which may be the same or different if more than one such group is present, is a hydrocarbyloxy residue comprising from 1 to 100 carbon atoms;
R³, is -R⁴SiR¹ₚR²_{q}, wherein
p is 0 to 3, preferably 0 to 2,
q is 0 to 3, preferably 1 to 3,
with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or -PR¹-, where R¹ and R² are as previously defined; and
x is 0 to 3, y is 1 to 4, z is 0 or 1, with the proviso that x + y + z = 4;
and m = 1 or 2.

The more preferable SR compound is selected from a subgroup of a compound of formula (III), wherein R¹, which may be the same or different if more than one such group is present, is an, alkyl, alkenyl, arylalkyl, alkylaryl or aryl group containing 1 to 40 carbon atoms, with the proviso that if more than one R¹ group is present the total number of carbon atoms of the R¹ groups is at most 60.

More preferably, SR compound is selected from a subgroup (IIIa) of a compound of formula (III),

(R^{I})ₓ[Si(R²)_{y}(R³)_{z}]ₘ (IIIa)

wherein
R¹ is a linear or branched C₆- to C₂₂-alkyl group or a linear or branched C₂- to C₂₂-alkenyl group;
R² is a linear or branched C₁- to C₁₀-alkoxy group;
R³, R⁴SiR¹ₚR²q, wherein
p is 0 to 3,
q is 0 to 3,
with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂- -NH-, -NR¹- or -PR¹-, where R¹ and R² are as previously defined; and
x is 0 to 3, y is 1 to 4, z is 0 or 1, with the proviso that x + y + z = 4;
and m = 1.

Even more preferable SR compound is a compound of formula (IIIa), wherein x = 1, y = 3, and z = 0. Most preferred SR compound is hexadecyl trimethoxy silane.

The SR compound is preferably present in the polymer composition and the amount of the SR compound is preferably 0.001 to 0.2 mol/kg polymer composition, more preferably from 0.005 to 0.15 mol/kg polymer composition, more preferably from 0.01 to 0.1 mol/kg polymer composition, more preferably from 0.02 to 0.08 mol/kg polymer composition. The polymer composition may comprise a filler(s), e.g. a conductive filler, such as a conductive carbon black, if used as semiconductive compositions; or a flame retardant filler(s), such as magnesium or aluminium hydroxide, if used as flame retardant composition; or a UV protecting filler(s), such as UV-carbon black or UV stabiliser, if used as UV-stabilised composition; or any combination(s) thereof. The amount of the filler in general depends on the nature of the filler and the desired end application, as evident for a skilled person. E.g. when the polymer composition comprises conductive filler, then the amount thereof is of up to 65 wt%, preferably from 5 to 50 wt%, based on the total amount of the polymer composition.

The polymer composition may comprise a colorant which is then typically added to the composition in form of a color master batch. Such color master batches may be commercially available or may be prepared in a conventional manner by combining the colorant with a carrier medium. The amount of colorant master batch, if present, is preferably up to 5wt%, more preferably from 0.1 to 3 wt%, based on the total amount of the polymer composition.

The catalyst (b) can be added to polyolefin (a) as neat (i.e. as provided by the supplier) or in a master batch (MB). In case of the MB the carrier medium can be liquid or solid, for instance a carrier polymer.

The amount of polyolefin (a) in the polymer composition of the invention is typically of at least 35 wt%, preferably of at least 40 wt%, preferably of at least 50 wt%, preferably of at least 75 wt%, more preferably of from 80 to 100 wt% and more preferably of from 85 to 100 wt%, based on the total amount of the polymer component(s) present in the polymer composition. The preferred polymer composition consists of polyolefin (a) as the only polymer components. The expression means that the polymer composition does not contain further polymer components, but the polyolefin (a) as the sole polymer component. However, it is to be understood herein that the polymer composition may comprise further component(s) other than the polyolefin (a) component, such as additive(s) which may optionally be added in a mixture with a carrier polymer in so called master batch. Also the catalyst (b) can be added in form of a master batch, wherein the carrier medium is a polymer. In such cases the carrier polymer of the master batch is not calculated to the amount of the polymer components, but to the total amount of the polymer composition. The polymer composition of the invention can be produced before or after producing an article which is preferably a cable.

In a first embodiment for producing the polymer composition, the polyolefin (a) and the catalyst (b) are combined together before formation of an article which is preferably at least one layer of a cabler. The catalyst (b) can be added as such, i.e. as a neat catalyst (b) or in form of the MB, to the polyolefin (a). The components are preferably combined together by compounding in a conventional manner, e.g. by extruding the components with a screw extruder or a kneader. The obtained meltmixture is preferably pelletised and the pellets of the polymer composition, which can be of any size and shape, are used in the article, preferably in the cable, production process. Alternatively, in this first embodiment for producing the polymer composition the preparation of the polymer composition or an addition of part of the other component(s) thereof, such as the catalyst (b) or additive(s), or any mixture thereof, can be carried out during the article, preferably during the cable, production process, e.g. in a cable production line, e.g. in a mixer preceding the cable extruder or in the cable extruder, or in both. The obtained mixture is used to form an article, preferably at least one cable layer.

In a second embodiment, the catalyst (b) is combined together with the polyolefin (a) after the formation of an article, preferably a cable, from the polyolefin (a). For instance the catalyst (b) can migrate to a cable layer(s) of polyolefin (a) from another layer adjacent to said layer and thus the polymer composition is formed after the layer production and e.g. before or during the crosslinking of the layer(s).

The first or second embodiment for producing the polymer composition can be chosen depending on the desired article, preferably the desired cable application of the polymer composition.

### End use of the polymer composition

The invention also provides an article comprising a polymer composition which comprises a polyolefin (a) and a catalyst (b) as defined above or below in claims.

The preferred article is a cable, more preferably a power cable, more preferably a LV, MV or HV cable, which comprises a conductor surrounded by at least one layer comprising, preferably consisting of, a polymer composition which comprises a polyolefin bearing hydrolysable silane groups (a) and a silanol condensation catalyst (b), as defined above or below.

The preferred power cable is selected from
- a cable (A) comprising a conductor surrounded by at least an insulating layer comprising, preferably consisting of, a polymer composition which comprises a polyolefin (a) and a catalyst (b), as defined above, below or in claims; or
- a cable (B) comprising a conductor surrounded by an inner semiconductive layer, an insulating layer and an outer semiconductive layer, wherein at least one layer, preferably at least the insulation layer, comprises, preferably consists of, the polymer composition which comprises a polyolefin (a) and a catalyst (b), as defined above, below or in claims.

The cable (A) is preferably a LV or a MV cable. The cable (B) is preferably a MV cable or a HV cable.

In the embodiment of cable (B), the first and the second semiconductive compositions can be different or identical and comprise a polymer(s) which is preferably a polyolefin or a mixture of polyolefins and conductive filler, preferably carbon black. In case of cable (B), preferably, the inner semiconductive layer, the insulating layer and the outer semiconductive layer comprise a polymer composition of the invention. In this case the polyolefin (a) and/or the catalyst (b) of the polymer compositions of the layers can be same or different.

The term "conductor" means herein above and below that the conductor comprises one or more wires. Moreover, the cable may comprise one or more such conductors. Preferably the conductor is an electrical conductor and comprises one or more metal wires.

In the preferred cable of the invention at least the insulation layer comprises the polymer composition.

Insulating layers for medium or high voltage power cables generally have a thickness of at least 2 mm, typically at least 2.3 mm, and the thickness increases with increasing voltage the cable is designed for.

As well known the cable can optionally comprise further layers, e.g. layers surrounding the insulation layer or, if present, the outer semiconductive layers, such as screen(s), a jacketing layer(s), other protective layer(s) or any combinations thereof.

The article which is preferably a cable of the invention is preferably crosslinkable. "Crosslinkable" means that the polymer composition can be crosslinked using the (b) catalyst compound of formula (I) before the use in the end application thereof. Furthermore, the article, preferably the cable, of the invention is crosslinkable and crosslinked before the end use thereof.

Preferably a crosslinked article is provided which comprises, preferably consists of, the polymer composition as defined above or in claims which is crosslinked in the presence of the catalyst (b) as defined above or in claims. More preferably the crosslinked article is a crosslinked cable comprising a conductor surrounded by at least one layer, preferably at least an insulation layer, wherein at least said one layer, preferably at least an insulation layer, comprises, preferably consists of, the polymer composition as defined above or in claims which is crosslinked in the presence of the catalyst (b) as defined above or in claims. The crosslinked cable is novel as such, since the layer of the polymer composition contains the residues of the catalyst (b).

The invention further provides a process for producing an article comprising a step of forming an article using the polymer composition as defined above or below.

The preferred process is a process for producing a cable of the invention as defined above, whereby the process comprises the step of
- applying on a conductor, preferably by (co)extrusion, one or more layers, wherein at least one layer comprises the polymer composition which comprises
   (a) a polyolefin bearing hydrolysable silane groups and
   (b) a silanol condensation catalyst (b), as defined above, below or in claims.

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads. For instance a triple extrusion can be used for forming three layers. In case a layer is formed using more than one extrusion heads, then for instance, the layers can be extruded using two extrusion heads, the first one for forming the inner semiconductive layer and the inner part of the insulation layer, and the second head for forming the outer insulation layer and the outer semiconductive layer. (Co)extrusion can be effected in any conventional cable extruder, e.g. a single or twin screw extruder.

As well known a meltmix of the polymer composition or component thereof, is applied to form a layer. Meltmixing means mixing above the melting point of at least the major polymer component(s) of the obtained mixture and is carried out for example, without limiting to, in a temperature of at least 15°C above the melting or softening point of polymer component(s). The meltmixing can be carried out in the cable extruder or in the mixer, e.g. kneader, preceding the extruder, or in both.

The more preferable cable process produces:
(i) a cable (A), wherein the process comprises the steps of
   - applying on a conductor, preferably by (co)extrusion, at least an insulation layer comprising, preferably consisting of, a polymer composition which comprises a polyolefin (a) and a catalyst (b), as defined above, below or in claims; or
(ii) a cable (B), wherein the process comprises the steps of
   - applying on a conductor, preferably by (co)extrusion, an inner semiconductive layer comprising a first semiconductive composition, an insulation layer comprising an insulation composition and an outer semiconductive layer comprising a second semiconductive composition, in that order,
      wherein the composition of at least one layer, preferably at least the insulation composition of the insulation layer comprises, preferably consists of, a polymer composition which comprises
   - a polyolefin (a) and a catalyst (b), as defined above, below or in claims.

In this embodiment of cable (B), the first and the second semiconductive compositions can be different or identical and comprise a polymer(s) which is preferably a polyolefin or a mixture of polyolefins and conductive filler, preferably carbon black.

As well known, the polymer composition of the layer(s) of the cable can be produced before or during the cable production process. Moreover the polymer composition(s) of the layer(s) can each independently comprise part or all of the components of the final composition, before introducing to the (melt)mixing step a) of the cable production process. Then any remaining component(s) are introduced during or after cable formation.

In the preferred cable at least the insulation layer comprises the polymer composition. In this embodiment the polyolefin (a) and the catalyst (b) of the polymer composition are combined according to the first embodiment of the preparation process of the polymer composition as described above, i.e. before the polymer composition is introduced, preferably in pellet form, to the cable production line.

In case one or two of the semiconductive layers of cable (B) comprise the polymer composition, then the polymer composition is preferably prepared according to the second embodiment of the preparation process of the polymer composition as described above, i.e. after the layer formation using polyolefin (a). Then the catalyst (b) can migrate from an adjacent layer, typically insulation layer, to the formed semiconductive layer.

The cable production process of the invention comprises preferably a further step of crosslinking the produced cable. According to a preferred embodiment of said process a crosslinked cable is produced, wherein the process comprises a further step of crosslinking the obtained at least one layer comprising a polymer composition as defined above or below. The crosslinking is carried out in the presence of the catalyst (b) and water, also called as moisture curing. For instance, water vapour or liquid water, or a combination thereof, can be introduced to the crosslinking step of the produced cable (e.g. crosslinking is effected in so called sauna and/or in water bath). Alternatively, in some embodiments, the water needed for the crosslinking of the cable layer may originate from the ambient moisture or from crystal water which is released from the catalyst (b), or from the combination thereof. In the latter case no extra water need not or may be introduced, depending on the cable application

The silane groups present in the polyolefin (a) are hydrolysed under the influence of water in the presence of the present silanol condensation catalyst (b) resulting in the splitting off of alcohol and the formation of silanol groups, which are then crosslinked in a subsequent condensation reaction wherein water is split off and Si-O-Si links are formed between other hydrolysed silane groups present in said polyolefin (a). The crosslinked polymer composition has a typical network, i.a. interpolymer crosslinks (bridges), as well known in the field. Usually, moisture curing is performed in ambient conditions or in a so called sauna or water bath at temperatures of 70 to 100 °C.

Moreover, the cable production process preferably comprises a further step of
(i) crosslinking the insulation composition of the insulation layer of the cable (A) in the presence of a catalyst (b) as defined above or below and water, or
(ii) crosslinking at least one of the insulation composition of the insulation layer, the first semiconductive composition of the inner semiconductive layer or the second semiconductive composition of the outer semiconductive layer of the cable (B),
   - preferably crosslinking at least the insulation composition of the insulation layer,
   - more preferably crosslinking the insulation composition of the insulation layer and at least one of the first semiconductive composition of the inner semiconductive layer and the second semiconductive composition of the outer semiconductive layer,
   - more preferably crosslinking the insulation composition of the insulation layer, the first semiconductive composition of the inner semiconductive layer, and, optionally, and preferably, the second semiconductive composition of the outer semiconductive layer,
      in the presence of a catalyst (b) as defined above or below and water.

In case of cable (B), the outer semiconductive layer can be bonded (non-strippable) or strippable, which terms have a well known meaning. The bonded outer semiconductive layer is typically crosslinked. The strippable outer semiconductive layer is typically not crosslinked.

Accordingly, in case of cable (B), preferably, the inner semiconductive layer, the insulating layer and optionally the outer semiconductive layer, depending whether bonded or strippable, are crosslinked.

A crosslinked cable obtainable by the process is also provided.

Furthermore, the invention provides a use of a catalyst (b) as defined above or below for crosslinking a polyolefin (a) as defined above or below, more preferably for crosslinking at least one layer of a cable comprising the polyolefin (a) as defined above or below.

### Determination methods

**Wt%:** % by weight
**Total amount** means weight, if in %, then 100wt%. E.g. the total amount (100 wt%) of the polymer composition.

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg (MFR₂) or 21.6 kg (MFR₂₁).

### Density

Low density polyethylene (LDPE): The density was measured according to ISO 1183-2. The sample preparation was executed according to ISO 1872-2 Table 3 Q (compression moulding).

Low pressure process polyethylene: Density of the polymer was measured according to ISO 1183/1872-2B.

### Gel content

Tape samples as prepared below in experimental part under "Tape sample preparation" were used to determine the gel content according to ASTM D 2765-01, Method B, using decaline extraction, with the following two deviations from this standard:
1) An addition extraction for 1 hour with new decaline was done in order to secure that all solubles were extracted.
2) Only 0.05% antioxidant (Irganox 1076) was added to the decalin instead of 1% as specified in the standard.

The gel content was then calculated according to said ASTM D 2765-01.

**Content (wt% and mol%) of polar comonomer:** Comonomer content (wt%) of the polar comonomer was determined in a known manner based on Fourier transform infrared spectroscopy (FTIR) determination calibrated with ¹³C-NNM as described in Haslam J, Willis HA, Squirrel DC. Identification and analysis of plastics, 2nd ed. London Iliffe books; 1972. FTIR instrument was a Perkin Elmer 2000, 1scann, resolution 4cm⁻¹.

For determination of the comonomers, films with thickness 0.1 mm were prepared. The peak for the used comonomer was compared to the peak of polyethylene as evident for a skilled person (e.g. the peak for butyl acrylate at 3450 cm⁻¹ was compared to the peak of polyethylene at 2020 cm⁻¹). The weight-% was converted to mol-% by calculation based on the total moles of polymerisable monomers.

**Content (mol-%) of hydrolysable silane group(s) (Si(Y)_{3-q}) using X-ray fluorescence analysis:** The pellet sample was pressed to a 3 mm thick plaque (150°C for 2 minutes, under pressure of 5 bar and cooled to room temperature). Si-atom content was analysed by wavelength dispersive XRF (AXS S4 Pioneer Sequential X-ray Spectrometer supplied by Bruker). The pellet sample was pressed to a 3 mm thick plaque (150°C for 2 minutes, under pressure of 5 bar and cooled to room temperature).

Generally, in XRF- method, the sample is irradiated by electromagnetic waves with wavelengths 0.01-10 nm. The elements present in the sample will then emit fluorescent X-ray radiation with discrete energies that are characteristic for each element. By measuring the intensities of the emitted energies, quantitative analysis can be performed. The quantitative methods are calibrated with compounds with known concentrations of the element of interest e.g. prepared in a Brabender compounder.

The XRF results show the total content (wt%) of Si and are then calculated and expressed herein as Mol %-Content of hydrolysable silane group(s) (Si(Y)_{3-q}).

### Experimental part

### Preparation of examples

### Base polyolefin (a)

### Polyolefin I:

Commercially available copolymer of ethylene with vinyl trimethoxy silane (VTMS) comonomer, LE4423, supplier Borealis, VTMS content of the copolymer of 1.35 wt% (0,26 mol%), MFR₂ of 1,0g/10min (190°C /2,16 kg) and density of 923 kg/m³, produced the high pressure polymerisation, in a tubular reactor.

### Polyolefin II:

A conventional low density homopolymer of polyethylene produced in a high pressure polymerisation process and grafted with VTMS. VTMS content in the polymer of 1,5 wt%, MFR₂ of 2,0 and density of 922,5 kg/m³.

### Reference Master Batch:

Commercially available master batch of silane condensation catalyst LE4476, wherein the active catalyst component is based on sulfonic acid, supplied by Borealis.

### Inventive Master Batches:

**Inventive catalyst 1:** Potassium hydroxide (KOH) CAS-nr: 1310-58-3, supplier Sigma-Aldrich

**Inventive catalyst 2:** Cesium hydroxide monohydrate (CsOH*H₂O) CAS-nr: 35103-79-8, supplier Sigma-Aldrich

### Inventive Master batch preparation:

Inventive master batch 1 and inventive master batch 2 were prepared by compounding the inventive catalyst 1 and, respectively, the inventive catalyst 2 with the same conventional ethylene butyl acrylate copolymer (butyl acrylate, BA, content 17 wt%) as used for the reference MB. The obtained inventive master batch 1 contained 0,3 wt% of the inventive catalyst 1 and the obtained inventive master batch 2 contained 0,8 wt% of the inventive catalyst 2

### Tape sample preparation:

Tape samples were prepared by conventional compounding, i.e. meltmixing, the test polyolefin (a) together with the inventive master batch 1, inventive master batch 2 or, respectively, the reference master batch in a tape extruder (Collin Teach-Line Extruder, Type: E 20 T SCD 15, settings disclosed in table 2) and in amounts to obtain a test or reference polymer composition containing the inventive catalyst or, respectively, the reference catalyst in an amounts as given below in the table 2.

**Table 1. Compounding conditions**

| **Set Values Temperature [°C]** | | | | | | **Extruder** | |
|---|---|---|---|---|---|---|---|
| Zon 1 | Zon 2 | Zon 3 | Zon 4 | Zon 5 | Zon 6 | Speed [rpm] | Output [kg/h] |
| 60 | 150 | 160 | 170 | 170 | 170 | 30 | 0.8 |

The obtained tape samples (with 1.8±0.1 mm in thickness) were used for crosslinking and for determining gel content and hot set.

Crosslinking of inventive compositions was effected in ambient conditions, at 23 °C and 50% relative humidity, and let crosslinking to occur for different time periods as specified in the below tables. Accordingly, gel content was measured after crosslinking.

The components and their amounts of the inventive and reference compositions, the crosslinking conditions and period, as well as the results of the measurements are given in table 3.

**Table 2. Catalytic effect of the Inventive composition 1 compared to Reference composition 1**

| | Gel content 30 h ambient¹ | Gel content 14 days ambient¹ |
|---|---|---|
| Inv. Comp. 1 (2,3 mmol/kg of Inventive catalyst 1 in Polyolefin I) | 26 | |
| Inv. Comp. 2 (2,3 mmol/kg of Inventive catalyst 1 in Polyolefin II) | 51 | |
| Inv. Comp. 3 (2,3 mmol/kg of Inventive catalyst 2 in Polyolefin I) | | 67 |
| Ref. Comp. 1 (2,3 mmol/kg of ref. catalyst in Polyolefin I) | 56 | 77 |
| Reference Polyolefin (Polyolefin I without any catalyst) | 0 | 0 |

| | | |
|---|---|---|
| 1.Crosslinking in ambient conditions at 23 °C for the specified time period. | | |

## Claims

1. An article comprising a polymer composition which comprises
(a) a polyolefin bearing hydrolysable silane groups and
(b) a silanol condensation catalyst compound, which is a hydroxide of group 1 or group 2 element of the Periodic Table of the Elements (according to IUPAC nomenclature of inorganic chemistry 1989) .

2. The article according to claim 1 which is a cable comprising a conductor surrounded by at least one layer comprising a polymer composition which comprises
(a) a polyolefin bearing hydrolysable silane groups and
(b) a silanol condensation catalyst compound, which is a hydroxide of group 1 or group 2 element of the Periodic Table of the Elements (according to IUPAC nomenclature of inorganic chemistry 1989).

3. The article according to claim 2 which is a cable, wherein the at least one layer is selected from an insulation layer, a semiconductive layer or a jacketing layer.

4. The article according to claim 2 or 3 which is a cable, wherein said cable is a power cable comprising a conductor surrounded at least by an inner semiconductive layer, an insulating layer and an outer semiconductive layer, wherein at least one layer, preferably at least the insulation layer or at least one of the inner or outer semiconductive layer comprises, preferably consists of, the polymer composition which comprises
(a) a polyolefin bearing hydrolysable silane groups and
(b) a silanol condensation catalyst compound which is is a hydroxide of group 1 or group 2 element of the Periodic Table of the Elements (according to IUPAC nomenclature of inorganic chemistry 1989).

5. The article according to any of the preceding claims 2-4 which is a cable, wherein said at least one layer is an insulation layer.

6. The article according to any of the preceding claims, wherein the silanol condensation catalyst compound (b) is a hydroxide of group 1 element of the Periodic Table of the Elements (according to ILTPAC nomenclature of inorganic chemistry 1989).

7. The article according to any of the preceding claims, wherein the silanol condensation catalyst compound (b) is selected from LiOH, NaOH, KOH or CsOH, or from any combinations thereof.

8. The article according to any of the preceding claims, wherein the silanol condensation catalyst compound (b) is selected from one or more of LiOH, KOH or CsOH.

9. The article according to any of the preceding claims, wherein the polymer composition comprises the silanol condensation catalyst (b) in an amount of 0.0001 to 6.0 wt%, preferably 0.001 to 2.0 wt%, more preferably 0.01 to 0.5 wt%, based on the combined amount of the polyolefin bearing hydrolysable silane groups (a) and the silanol condensation catalyst (b).

10. The article according to any of the preceding claims, wherein the polyolefin bearing hydrolysable silane groups (a) is a copolymer of olefin with a silane group(s) bearing comonomer, and, optionally, with other comonomer(s); or is a homopolymer or copolymer of olefin with silane groups which are introduced by grafting a silane group(s) containing compound to the polyolefin polymer.

11. The article according to any of the preceding claims, wherein the polyolefin bearing hydrolysable silane groups (a) is a polypropylene or polyethylene, preferably a polyethylene, preferably a polyethylene produced in a the presence of an olefin polymerisation catalyst or a polyethylene produced in a high pressure process, which bears hydrolysable silane groups.

12. The article according any of the preceding claims, wherein the silane group(s) bearing comonomer or compound is a compound of formula (Ic),
R¹SiR²qY_{3-q} (Ic)
wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

13. The article according to any of the previous claims, wherein the polymer composition comprises hydrolysable silane groups in an amount of from 0.001 to 12 mol%, preferably of from 0.01 to 4 mol%, most preferably of from 0.05 to 1.6 mol%, based on the total amount of the polymer composition, preferably the hydrolysable silane groups originate from the polyolefin bearing hydrolysable silane groups (a).

14. The article according to any of the preceding claims, wherein the polymer composition comprises a scorch retarding compound, which is preferably a silicon containing compound and has a structure according to the formula (III)
(R^{I})ₓ[Si(R²)_{y}(R³)_{z}]m (III)
wherein
R¹, which may be the same or different if more than one such group is present, is a monofunctional hydrocarbyl residue, or, if m = 2, is a bifunctional, hydrocarbyl residue, comprising from 1 to 100 carbon atoms;
R², which may be the same or different if more than one such group is present, is a hydrocarbyloxy residue comprising from 1 to 100 carbon atoms;
R³, is -R⁴SiR¹ₚR²_{q}, wherein
p is 0 to 3, preferably 0 to 2,
q is 0 to 3, preferably 1 to 3,
with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or -PR¹-, where R¹ and R² are as previously defined; and
x is 0 to 3, y is 1 to 4, z is 0 or 1, with the proviso that x + y + z = 4;
and m = 1 or 2.

15. A process for producing an article which is a cable according to any of claims 2-14, whereby the process comprises the step of
- applying on a conductor, preferably by (co)extrusion, one or more layers, wherein at least one layer comprises, preferably consists of, the polymer composition which comprises
(a) a polyolefin bearing hydrolysable silane groups and
(b) a silanol condensation catalyst compound; as defined in any of the previous claims 2, 6 to 14,
preferably for producing :
(i) a cable (A), wherein the process comprises the steps of
- applying on a conductor, preferably by (co)extrusion, at least an insulation layer comprising, preferably consisting of, a polymer composition which comprises
(a) a polyolefin bearing hydrolysable silane groups and
(b) a silanol condensation catalyst compound; as defined in any of the previous claims 2, 6 to 14, or
(ii) a cable (B), wherein the process comprises the steps of
- applying on a conductor, preferably by (co)extrusion, an inner semiconductive layer comprising a first semiconductive composition, an insulation layer comprising an insulation composition and an outer semiconductive layer comprising a second semiconductive composition, in that order, wherein the composition of at least one layer, preferably at least the insulation composition of the insulation layer comprises, preferably consists of, a polymer composition which comprises
(a) a polyolefin bearing hydrolysable silane groups and
(b) a silanol condensation catalyst compound; as defined in any of the previous claims 2, 6 to 14.

16. The process according to claim 15 for producing an article which is a crosslinked cable, wherein the process comprises a further step of crosslinking the obtained at least one layer comprising, preferably consisting of, a polymer composition as defined in any of the previous claims 2, 6 to 14 in the presence of water, preferably a step of
(i) crosslinking the insulation composition of the insulation layer of the cable (A) in the presence of water, or
(ii) crosslinking at least one of the insulation composition of the insulation layer, the first semiconductive composition of the inner semiconductive layer or the second semiconductive composition of the outer semiconductive layer of the cable (B),
- preferably crosslinking at least the insulation composition of the insulation layer of the cable (B),
- more preferably crosslinking the insulation composition of the insulation layer and at least one of the first semiconductive composition of the inner semiconductive layer and the second semiconductive composition of the outer semiconductive layer of the cable (B),
- more preferably crosslinking the insulation composition of the insulation layer, the first semiconductive composition of the inner semiconductive layer and, optionally the second semiconductive composition of the outer semiconductive layer of the cable (B),
in the presence of water.

17. A crosslinked article which is a cable and obtainable by the process according to claim 16.
